# EUROPÄISCHE PATENTSCHRIFT

(11) **EP 0 830 958 B1**
(45) Veröffentlichungstag und Bekanntmachung des Hinweises auf die Patenterteilung: **10.03.1999**
(21) Anmeldenummer: 97114524.8
(22) Anmeldetag: 22.08.1997
(51) Int. Cl.: B60G 17/052, B62D 61/12

(54) **Baueinheit zum Steuern einer Liftachse an einem mehrachsigen Nutzfahrzeug**
Control assembly for a lifting axle of a multiple axle utility vehicle
Bloc de commande d'un essieu relevable pour un véhicule utilitaire à plusiers essieux

(30) Priorität: 11.09.1996 DE 19636946
(43) Veröffentlichungstag der Anmeldung: 25.03.1998
(73) Patentinhaber: Haldex Brake Products GmbH & Co. KG, 69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- DE-C- 4 037 461

## Beschreibung

Die Erfindung betrifft eine Baueinheit zum Steuern einer Liftachse an einem mehrachsigen Nutzfahrzeug, mit einem Achsliftventil, einem Regelventil zum automatischen Anheben bzw. Absenken der Liftachse in Abhängigkeit vom Beladungszustand, mindestens einem Umschaltventil sowie den zugehörigen Leitungsverbindungen für die Schaltelemente, die in einem gemeinsamen Gehäuse untergebracht sind, wobei das Achsliftventil eine in zwei Stellungen verschiebbare Steuerstange aufweist, die die Be- und Entlüftung des Hebebalges der Liftachse mit dem Druck aus einem Vorratsbehälter steuert. Solche Baueinheiten dienen zum Ausrüsten von Kraftfahrzeugen, und zwar als Zugfahrzeuge, Sattelauflieger, Anhängefahrzeuge u. dgl., die mindestens eine Fahrachse und eine Liftachse aufweisen, die in der voll beladenen Stellung des Nutzfahrzeuges abgesenkt ist, während sie in der Beladungsstellung Leer des Fahrzeuges über ein Achsliftventil, welches insbesondere manuell betätigbar ist, angehoben oder auch abgesenkt werden kann. Die Baueinheit ist unabhängig davon einsetzbar, ob sie in Verbindung mit einem beiden Fahrzeugseiten zugeordneten Niveauregelventil oder mit zwei jeweils einer Fahrzeugseite zugeordneten Niveauregelventilen eingesetzt wird.

Eine Baueinheit der eingangs beschriebenen Art ist aus der DE 40 37 461 C1 bekannt, die dem Oberbegriff des Anspruchs 1 entspricht. Dabei sind innerhalb eines gemeinsamen Gehäuseblocks ein Achsliftventil, ein Regelventil und mindestens ein Umschaltventil untergebracht, wobei die Achsen dieser Schaltelemente parallel beabstandet angeordnet sind. Zusätzlich kann auch noch ein Dämpfungsbehälter in dem Gehäuseblock verwirklicht sein. Alternativ kann der Dämpfungsbehälter auch außerhalb des Gehäuseblocks realisiert sein und über entsprechende Leitungsverbindungen an das Regelventil angeschlossen sein. Die bekannte Baueinheit besitzt zwei Umschaltventile, die ihrerseits koaxial angeordnet sind. Das eine Umschaltventil ist den Luftfederbälgen der linken Fahrzeugseite der Liftachse und das andere Umschaltventil der rechten Fahrzeugseite der Luftfederbälge der Liftachse zugeordnet. Das Regelventil wird nur über einen Steuerdruck angesteuert, wie er von dem Niveauregelventil der einen Fahrzeugseite geliefert wird. Die bekannte Baueinheit wird zweikreisig angesteuert, d. h. von dem Niveauregelventil sind zwei Steuerleitungen zu dem Gehäuseblock herangeführt und jeweils einem Umschaltventil zugeleitet. Statt des einen Niveauregelventils können natürlich auch zwei Niveauregelventile vorgesehen sein.

Weitere Einzelheiten und Weiterbildungen an derartigen Baueinheiten bzw. Steuerventilen sind aus der DE 43 14 994 C1, der DE 43 19 943 C1 und der DE 44 10 892 C2 bekannt.

Aus der DE 28 11 874 C2 ist eine selbsttätige Steuervorrichtung für die Hubvorrichtung einer Liftachse bekannt, die einen in einem Gehäuse geführten und auf einer Feder abgestützten Schieber aufweist. Der Schieber besitzt zwei Wirkflächen, die jeweils mit dem entsprechend dem Beladungszustand modifizierten Druck eines Niveauregelventils beaufschlagbar sind. Der von dem Niveauregelventil ausgesteuerte Druck ist nicht konstant und zudem dann besonders klein, wenn das Fahrzeug unbeladen ist, also in einem Zustand, in dem gerade die Anhebung der Listachse gewünscht wird. Die Einwirkung dieses relativ kleinen Druckes auf die Hubvorrichtung der Liftachse erfordert dort besondere konstruktive Maßnahmen. Steigt der von dem Niveauregelventil ausgesteuerte Druck infolge Beladung des Fahrzeuges an, so schaltet die Steuervorrichtung selbsttätig in die andere Stellung um. Dann wird auch die zweite Wirkfläche an dem Schieber beaufschlagt, sodaß sich zwischen dem Absenken der Liftachse bei erfolgender Beladung des Fahrzeuges und dem Wiederanheben der Liftachse nach erfolgender Entladung eine erhebliche Hysterese ergibt. Ein willkürliches Absenken der Liftachse in unbeladenem Zustand des Fahrzeugs ist nicht möglich.

Der Erfindung liegt die Aufgabe zugrunde, eine Baueinheit der eingangs beschriebenen Art bereitzustellen, die bei vereinfachtem konstruktiven Aufbau eine einkreisige Ansteuerung über ein Niveauregelventil oder eine zweikreisige Ansteuerung über zwei Niveauregelventile möglich macht und nur mindestens ein Umschaltventil benötigt, um die Luftfederbälge einer Liftachse zu bedienen.

Erfindungsgemäß wird dies bei der Baueinheit der eingangs beschriebenen Art dadurch erreicht, daß das Achsliftventil und das Umschaltventil mit gemeinsamer Achse in dem Gehäuse untergebracht sind und daß die Steuerstange des Achsliftventils zugleich als Bestandteil des Ein/Auslaßventils des Umschaltventils für die Druckversorgung der Luftfederbälge der Liftachse über ein Niveauregelventil ausgebildet ist.

Die Erfindung geht von dem Gedanken aus, das Achsliftventil und das Umschaltventil - entweder in einfacher oder in doppelter Anordnung - miteinander baulich derart zu verbinden, daß die gemeinsame Steuerstange des Achsliftventils sowohl Funktionen des Ventilkörpers des Achsliftventils wie auch des Ventilkörpers des Umschaltventils erfüllt. Damit wird nicht nur die Anzahl der einzelnen Elemente dieser Ventile erniedrigt, sondern auch die Herstellung und der Platzbedarf insgesamt verringert. Es entsteht eine relativ kleine und kompakte Baueinheit, in der nur noch das Achsliftventil und das Umschaltventil einerseits und das Regelventil andererseits vorzugsweise mit ihren Achsen parallel zueinander angeordnet sind. Die Steuerstange wird in Schieberbauart realisiert, so daß nur noch ein bewegliches Teil in dem Gehäuse vorgesehen ist, welches wesentlicher Bestandteil zugleich des Achsliftventils wie auch des Umschaltventiles ist. Die Steuerstange des Achsliftventiles bildet gleichsam auch den Ventilkörper eines oder mehrerer Umschaltventile, und zwar im Zusammenhang mit Dichtungen und Bohrungen sowie Verbindungseinschnürungen zwischen den Dichtungen.

Die gemeinsame Steuerstange des Achsliftventils und des Umschaltventils kann in einer insbesondere gestuften Gehäusebohrung gleitend und dichtend geführt sein und zusätzlich zu einigen Dichtungen einen weiteren Dichtungsring aufweisen, der mit einer Bohrung, die mit einer von dem Niveauregelventil herangeführten Leitung in Verbindung steht, das Einlaßventil und mit einer axial beabstandet angeordneten weiteren Bohrung, die über eine Leitung mit den Luftfederbälgen der Liftachse in Verbindung steht, das Auslaßventil des Umschaltventils bildet. Eine solche gestufte Gehäusebohrung läßt sich einfach von einer Seite her bearbeiten und erbringt zusätzlich die Möglichkeit, daß eingesetzte Dichtungsringe beim Einführen der Steuerstange in das Gehäuse nicht beschädigt werden.

Die gemeinsame Steuerstange des Achsliftventils und des Umschaltventils kann zu Zwecken der Entlüftung hohl ausgebildet sein. Damit erhält die Steuerstange eine dritte Funktion. Die Anordnung gesonderter Entlüftungsleitungen im Gehäuse wird entbehrlich. Das Gehäuse wird lediglich durch einen Deckel verschlossen, durch den die Entlüftung nach außen geführt ist.

Um die Herstellung und die Montage zu vereinfachen, kann ein die Steuerstange umgebender gehäusefester Einsatzkörper vorgesehen sein, der die beiden Bohrungen trägt, die über drei Dichtungen gehäuseseitig abgedichtet sind. Auch dies vereinfacht die Montage und ermöglicht es, die Achsen der Anschlüsse der Leitungen relativ zu den Bohrungen zu verlagern.

Die Steuerstange kann zwei benachbart angeordnete Dichtringe für die zeitverzögerte Entlüftung des Liftbalges der Liftachse aufweisen. Damit wird bei einer Bewegung der Steuerstange der Liftbalg zunächst abgesperrt. Die Entlüftung des Liftbalges beginnt erst, nachdem die Steuerstange einen weiteren kleinen Weg zurückgelegt hat.

Zur gehäusefesten Lagerung des Einsatzkörpers kann ein die gestufte Bohrung abschließender Deckel vorgesehen sein, der zu Zwecken der Entlüftung hohl ausgebildet ist. Die Entlüftung des Achsliftventils und des oder der Umschaltventile wird auch hier zentral durch den Deckel hindurch durchgeführt.

Das Achsliftventil kann insbesondere einkreisig angesteuert sein. Dies bedeutet, daß nur ein Niveauregelventil vorgesehen ist und in der Baueinheit auch nur ein Umschaltventil verwirklicht wird. Andererseits läßt die Erfindung auch dann anwenden, wenn eine zweikreisige An- und Aussteuerung vorgesehen ist.

Die gemeinsame Steuerstange des Achsliftventils und des Umschaltventils kann eine kreisringförmige Wirkfläche zum Umschalten in Abhängigkeit von der Beaufschlagung durch das Regelventil aufweisen. Es versteht sich, daß dieser Wirkfläche ein Wirkraum zugeordnet ist, der über eine Leitung an das Regelventil angeschlossen ist.

Die Erfindung läßt vielfältige Weiterbildungen und Ausgestaltungen zu. So ist es beispielsweise möglich, daß die kreisförmige Wirkfläche der Steuerstange des Achsliftventils entgegen ihrer Beaufschlagungsrichtung durch den Balgdruck der Fahrachse auf einer Rückführfeder abgestützt ist und daß der die Rückführfeder aufnehmende Rückraum an die Atmosphäre angeschlossen ist. Damit ist die Liftachse automatisch dann angehoben, wenn die Wirkfläche über das Regelventil nicht beaufschlagt wird. Eine Handbetätigung der Steuerstange des Achsliftventils entfällt. Die hohl ausgebildete Steuerstange kann aber zugleich zur Entlüftung des die Rückführfeder aufnehmenden Rückraumes genutzt werden.

In der von einem Federbalg der Fahrachse zu dem Regelkolben des Regelventils führenden Leitung kann ein elektrisch schaltbares Sperrventil vorgesehen sein, das in nicht-betätigtem Zustand den Durchgang durch die Leitung freigibt und in betätigtem Zustand die Leitung absperrt oder zumindest stark drosselt. Damit wird erreicht, daß der Regelkolben des Regelventils unbeeinflußt von Druckschwankungen bleibt, die während des Fahrens oder bei Bremsbetätigung auftreten können. Das Sperrventil ist willkürlich schaltbar, beispielsweise durch den Fahrzeugführer oder auch automatisch in Abhängigkeit von der Fahrzeuggeschwindigkeit oder bei Durchführung einer Bremsung o. dgl..

Es ist auch möglich, daß die Steuerstange von einer Belastungsfeder im Sinne der Absenkung der Liftachse belastet ist und die Steuerstange eine der Belastungsfeder entgegenwirkende Wirkfläche aufweist, die über ein elektrisch steuerbares Magnetventil mit Vorratsdruck beaufschlagbar ist. Damit ist sichergestellt, daß bei Spannungsausfall auf dem Fahrzeug die Liftachse immer abgesenkt ist und abgesenkt bleibt. Bei ordnungsgemäßer Spannungsversorgung kann der Ausgangsdruck des Regelventils auf einen Druckschalter gegeben werden, der dann das Magnetventil steuert, um so je nach Beladungszustand die Liftachse anzuheben oder abgesenkt zu halten. Damit läßt sich auf elegante Weise eine Anfahrhilfe realisieren.

Die Baueinheit kann einen dem Regelventil vorgeschalteten Dämpfungsbehälter aufweisen, sodaß auch die zusätzliche Anordnung eines gesonderten Dämpfungsbehälters und entsprechender Leitungsverbindungen in Fortfall kommt. Ein Dämpfungsbehälter ist grundsätzlich sinnvoll, um auf eindeutige Schaltverhältnisse hinzuwirken.

Die Erfindung wird anhand bevorzugter Ausführungsbeispiele weiter erläutert und beschrieben. Es zeigen:
- Fig. 1: eine Schnittdarstellung durch die Baueinheit in einer ersten einkreisig angesteuerten Ausführungsform,
- Fig. 2: einen Schnitt durch eine zweite Ausführungsform der Baueinheit, die hier zweikreisig angesteuert ist,
- Fig. 3: einen Schnitt durch eine dritte Ausführungsform der Baueinheit in mechanisch-automatischer Ausführung,
- Fig. 4: eine vierte Ausführungsform der Baueinheit mit Sperrventil und
- Fig. 5: einen Schnitt durch eine weitere Ausführungsform der Baueinheit, zweikreisig angesteuert, mit elektrischer Ansteuerung und automatischer Absenkung der Liftachse.

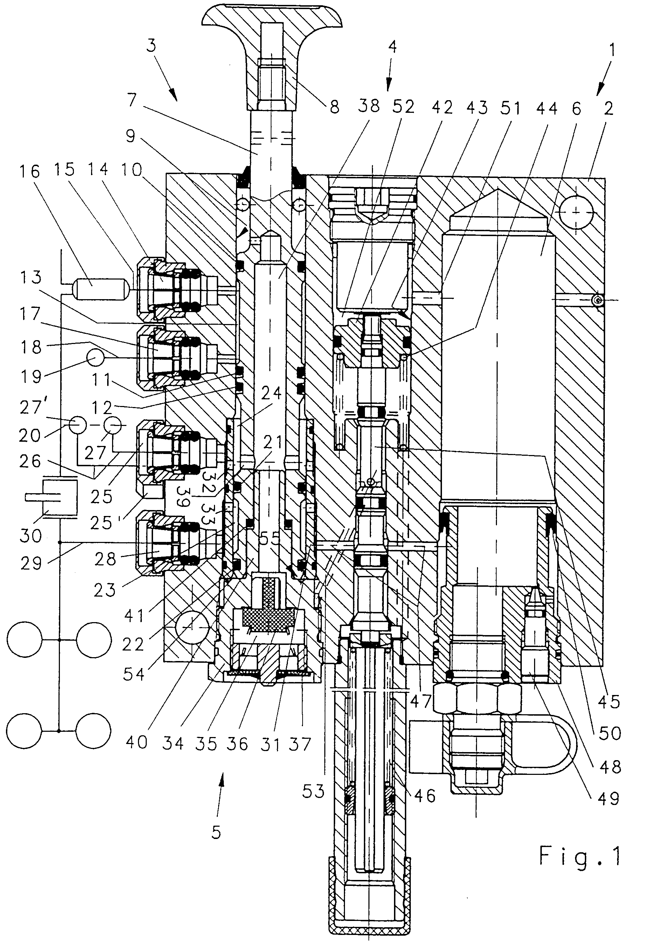

Die in Fig. 1 dargestellte Baueinheit 1 weist ein Gehäuse 2 auf, in welchem ein Achsliftventil 3, ein automatisches Regelventil 4 und ein Umschaltventil 5 verwirklicht sind. In dem Gehäuse 2 kann auch ein Dämpfungsbehälter 6 untergebracht sein.

Das Achsliftventil 3 weist eine in zwei Stellungen verschiebbare Steuerstange 7 auf, die bei manueller Betätigung einen Griff 8 besitzt, der aus dem Gehäuse 2 herausgeführt ist. Die Steuerstange 7 ist in einer insbesondere gestuft ausgebildeten Gehäusebohrung 9 untergebracht und mit Hilfe von Dichtungen gleitend und dichtend geführt. Eine erste Dichtung 10 erbringt die Abdichtung nach außen. Dichtungen 11 und 12 stellen an sich eine Doppelanordnung einer einzigen Dichtung dar. Zwischen den Dichtungen 10 und 11 besitzt die Steuerstange 7 eine Einschnürung 13 für die Verbindung eines Anschlusses 14, an den eine Leitung 15 angeschlossen ist, die mit einem Vorratsbehälter 16 in Verbindung steht. Am Gehäuse 2 ist in Zuordnung zu dem Anschluß 14 ein Anschluß 17 vorgesehen, von dem eine Leitung 18 zu dem Liftbalg 19 einer Liftachse 20 führt.

Auf der Steuerstange 7 ist eine weitere Dichtung 21 vorgesehen, die beabstandet zu einer Dichtung 22 angeordnet ist. Zwischen den Dichtungen 21 und 22 ist eine Einschnürung 23 gebildet. Die Dichtungen 21 und 22 können auf gleichem Durchmesser wie die Dichtungen 10, 11 und 12 angeordnet sein. Auch eine vergleichsweise geringfügig größere Ausbildung ist möglich und sinnvoll im Sinne einer leichten Herstellung und Montage. Die Steuerstange weist zwischen den Dichtungen 12 und 21 eine weitere Einschnürung 24 auf, die zu einem Anschluß 25 führt, an den über eine Leitung 26 der Luftfederbalg 27 der Liftachse einer Fahrzeugseite angeschlossen ist. Die Einschnürung 24 kann gleichzeitig mit einem Anschluß 25' in Verbindung stehen, von dem die Leitung zu dem Luftfederbalg 27' der anderen Fahrzeugseite der Liftachse führt. Auch eine andere Leitungsverbindung ist natürlich denkbar.

Die Einschnürung 23 ist mit einem Anschluß 28 verbindbar, von dem eine Leitung 29 zu einem Niveauregelventil 30 führt. Über dieses Niveauregelventil 30 wird die Baueinheit angesteuert.

Im Bereich der Einschnürungen 23 und 24 ist zwischen die Steuerstange 7 und das Gehäuse 2 ein Einsatzkörper 31 eingeschaltet, der mit Hilfe dreier Dichtungen gehäuseseitig abgedichtet ist und zwei Bohrungen 32 und 33 aufweist, wobei die Bohrung 32 in dauernder Verbindung zu dem Anschluß 25 und die Bohrung 33 in dauernder Verbindung zu dem Anschluß 28 steht. Es versteht sich, daß der Einsatzkörper 31 auch fehlen könnte und entsprechende Leitungsverbindungen direkt im Gehäuse angeordnet sein könnten. Die Anordnung der Bohrungen 32 und 33 ist auf die Anordnung der Dichtungen 12, 21 und 22 sowie der Einschnürungen 23 und 24 abgestimmt. Der Einsatzkörper 31 ist mit Hilfe eines Deckels 34 ortsfest gelagert. Der Deckel 34 bildet zugleich einen Anschlag für die eingefahrene Stellung der Steuerstange 7. Der Deckel 34 ist hohl ausgebildet. In einem Kanal 35 ist ein Rückschlagventil angeordnet, welches in Richtung des Kanals 35 öffnet, der über ein Flatterventil 37 Anschluß an die Atmosphäre hat. Die Steuerstange 7 besitzt einen Kanal 38, der sich über einen Großteil der axialen Länge der Steuerstange 7 erstreckt und ebenfalls zu Entlüftungszwecken dient. Es wird einmal der Raum oberhalb der Dichtung 10 kontinuierlich an die Atmosphäre angeschlossen. Eine radiale Bohrung 39 in der Steuerstange 7 dient je nach Stellung der Steuerstange 7 der Entlüftung der Luftfederbälge 27, 27' oder des Liftbalges 19. Der Deckel 34 erstreckt sich mit einem Fortsatz 40 in den Kanal 38 der Steuerstange 7. Zu Abdichtungszwecken ist hier eine Dichtung 41 vorgesehen.

Fig. 1 zeigt die Stellung, in welcher die Liftachse 20 angehoben ist. Es besteht Verbindung vom Vorratsbehälter 16 zu dem Liftbalg 19 über die Einschnürung 13. Andererseits sind dabei die Luftfederbälge 27 und 27' entlüftet. Die von dem Niveauregelventil 30 herangeführte Leitung 29 ist abgesperrt. Es ist leicht vorstellbar, daß die Steuerstange 7 durch manuelles Herausziehen aus dem Gehäuse 2 um den dafür vorgesehenen Betrag in ihre andere Stellung verbracht werden kann. Dabei überfährt zunächst die Dichtung 11 eine Bohrung an dem Anschluß 17, so daß der Liftbalg 19 abgesperrt wird. Bei fortgesetzter Bewegung der Steuerstange 7 in diese Richtung überfährt auch die Dichtung 12 diese Stelle, wobei gleichzeitig oder vorher die Dichtung 21 die Bohrung 32 überfahren hat. Damit wird der Liftbalg 19 über die Bohrung 39 an die Atmosphäre angeschlossen und damit entlüftet, während die Einschnürung 23 die Verbindung zwischen den Bohrungen 33 und 32 herbeiführt, so daß die Luftfederbälge 27 und 27' der Liftachse 20 entsprechend der Vorgabe des Niveauregelventils 30 belüftet werden.

Das Regelventil 4 besitzt einen Kolben 42, der in einer Gehäusebohrung 43 dichtend und verschiebbar geführt ist. Der Kolben 42 ist auf einer Feder 44 gehäuseseitig abgestützt. An dem Kolben 42 ist ein Fortsatz 45 vorgesehen, der in der dargestellten Weise mit Dichtungen versehen ist und ein 3/2-Wegeventil bildet. Der Feder 44 ist eine einstellbare Feder 46 parallelgeschaltet, die in gleicher Richtung auf den Kolben 42 wirkt.

Von dem Anschluß 28 führt eine Leitung 47 über den Fortsatz 45 zu einem Einsatz 48 mit einem Drosselrückschlagventil. Ein einstellbarer Drosselkörper 49 gestattet die präzise Einstellung eines Drosselspaltes, über den der Dämpfungsbehälter 6 belüftet wird. Eine Ringmanschette 50 bildet das zugehörige parallelgeschaltete Rückschlagventil. Der Dämpfungsbehälter 6 ist über eine Leitung 51 mit dem Raum 52 verbunden, so daß hier der Kolben 42 des Regelventils 4 beaufschlagt werden kann. Bei Auftreten einer entsprechenden Kraft setzt sich der Kolben 42 in Bewegung, so daß dann die Leitung 47 an eine Leitung 53 angeschlossen wird, die gestrichelt dargestellt ist und in einen Wirkraum 54 führt, so daß hier eine kreisringförmige Wirkfläche 55 an der Steuerstange 7 zwischen den Dichtungen 22 und 41 beaufschlagt wird. Mit der daraus resultierenden Kraft kann die Steuerstange 7 in ihre andere, in Fig. 1 nicht dargestellte Stellung verschoben werden.

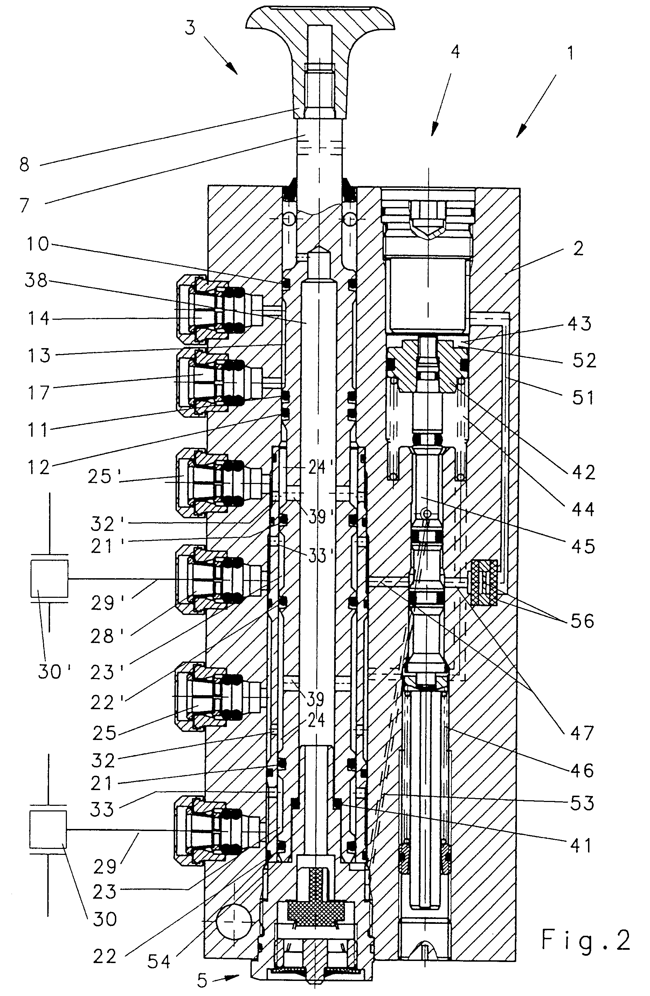

Die in Fig. 2 dargestellte Ausführungsform der Baueinheit ist für zweikreisige An- und Aussteuerung vorgesehen. Infolgedessen besitzt das Gehäuse 2 hier einen zusätzlichen Anschluß 28', an dem eine von einem zweiten Niveauregelventil 30' herangeführte Leitung 29' angeschlossen ist. Zur Realisierung zweier Umschaltventile sind auf der Steuerstange 7 zusätzlich die Dichtungen 21' und 22' vorgesehen, zwischen denen auch eine zweite Einschnürung 23' gebildet wird, die der Bohrung 33' und der Bohrung 32' zugeordnet ist. Der Einsatzkörper 31 ist entsprechend länger ausgebildet und gehäuseseitig mit den erforderlichen Dichtungen versehen.

Auch das Regelventil 4 ist vergleichbar ausgebildet. Da die Steuerstange 7 hier eine längere Bauweise als in Fig. 1 erfordert, besteht die Möglichkeit, die einstellbare Feder 46 innerhalb des Gehäuses 2 anzuordnen. Das Gehäuse 2 besitzt hier keinen Dämpfungsbehälter 6, um zu verdeutlichen, daß es für die Funktion dieser Baueinheiten unerheblich ist, ob der Dämpfungsbehälter innerhalb des Gehäuses oder außerhalb des Gehäuses 2 vorgesehen ist. Ein Dämpfungsbehälter kann in bestimmten Konfigurationen auch völlig fehlen. Die Leitung 47 ist hier direkt an die Leitung 51 angeschlossen. In dieser Verbindung ist eine Drossel 56 vorgesehen, um Druckschwankungen von dem Raum 52 und damit unnötige Bewegungen des Kolbens 42 zu verhindern.

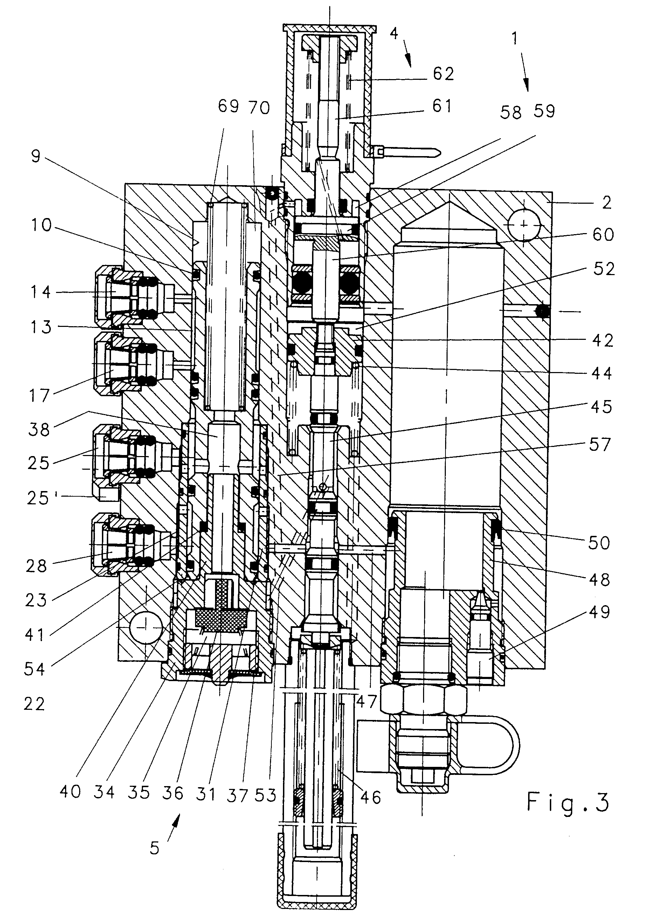

Fig. 3 zeigt eine Ausführungsform der Baueinheit mit einkreisiger An- und Aussteuerung, so daS auf die diesbezügliche Beschreibung der Fig. 1 verwiesen werden kann. Zusätzlich führt von der Leitung 53 eine Leitung 57 zu einem Raum 58, dem ein Kolben 59 zugeordnet ist, der einen Fortsatz 60 besitzt, mit dem er in den Raum 52 oberhalb des Kolbens 42 einragt. Der Kolben 59 besitzt nach der anderen Seite einen Fortsatz 61, mit dem er auf einer Feder 62 zum Zwecke der Druckeinstellung abgestützt ist. Damit wird erreicht, daß bei einer geringfügigen Entlastung des Fahrzeuges nach entsprechender Beladung, bei der eine Absenkung der Liftachse stattgefunden hat, ein Wiederanheben der Liftachse vermieden und das Hin- und Herschalten der Liftachse unterdrückt wird. Die Steuerstange 7 ist auf einer Rückführfeder 69 abgestützt, die in einem Rückraum 70 angeordnet ist, welcher ebenfalls durch den Kanal 38 der Steuerstange 7 an die Atmosphäre angeschlossen ist.

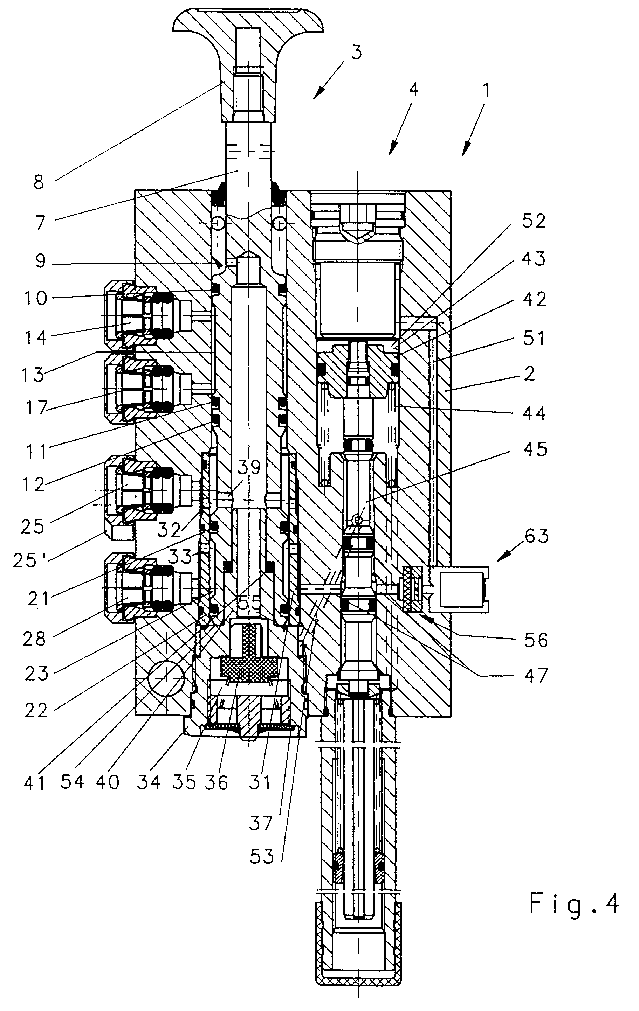

Die Ausführungsform der Baueinheit gemäß Fig. 4 baut teilweise auf der Ausführungsform gemäß Fig. 1 und andererseits auch auf der Ausführungsform gemäß Fig. 2 auf. Ein Dämpfungsbehälter ist auch hier nicht vorhanden. Im Bereich der Drossel 56 ist der Drossel 56 nachgeschaltet ein Sperrventil 63 vorgesehen, welches als elektrisch schaltbares Magnetventil ausgebildet sein kann. Das Sperrventil 63 besitzt keine eigene Entlüftung und nimmt in nicht erregtem Zustand die in Fig. 4 dargestellte Stellung ein, so daß die Leitung 47 über die Drossel 56 mit der Leitung 51 verbunden ist. Wird dagegen das Sperrventil 63 betätigt, also der entsprechende Ventilmagnet erregt, so wird die Leitung 51 abgesperrt und damit der im Raum 52 herrschende Druck eingeschlossen. Für die Schaltung des Sperrventils 63 ergeben sich verschiedene Möglichkeiten. Dies kann beispielsweise manuell von der Fahrerkabine willkürlich geschehen oder in Abhängigkeit von der Feststellung eines Fahrzustandes oder aber auch in Abhängigkeit von der Einleitung einer Bremsung.

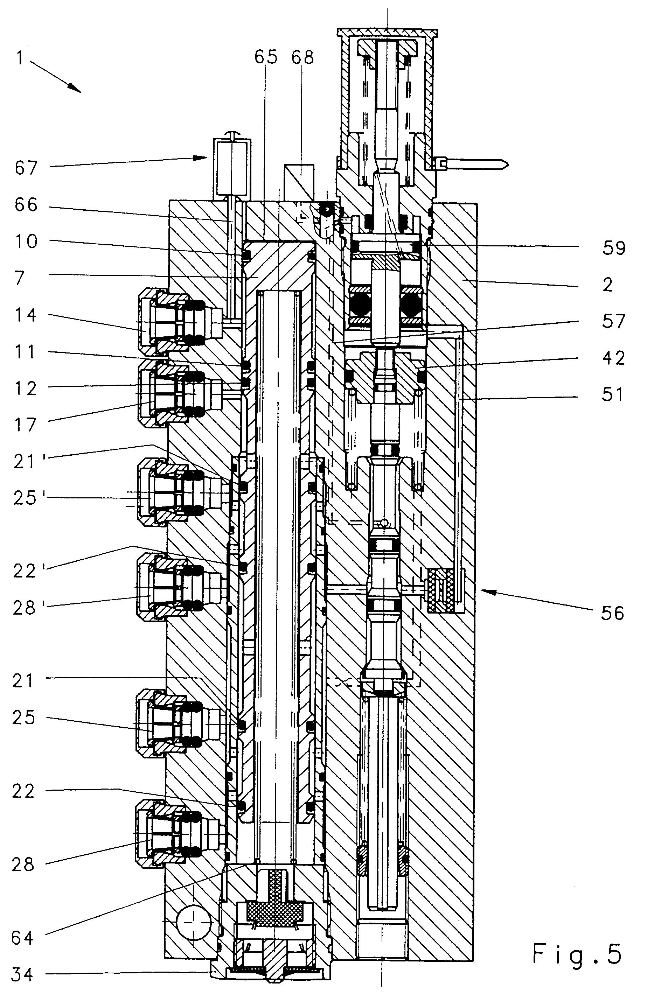

Die Baueinheit gemäß Fig. 5 baut auf der Ausführungsform gemäß Fig. 2 einerseits und auf der Ausführungsform gemäß Fig. 3 andererseits auf. Zur Realisierung eines elektrisch-automatischen Liftbetriebes ist die Steuerstange 7 komplett innerhalb des Gehäuses 2 untergebracht und auf einer Belastungsfeder 64 abgestützt. Die Steuerstange 7 weist eine Wirkfläche 65 auf, die über eine an den Druckluftvorratsbehälter 16 angeschlossene Leitung 66 und ein Magnetventil 67 ansteuerbar und damit in ihre andere Stellung überführbar ist. Es sei darauf hingewiesen, daß in diesem Falle die Steuerstange 7 keine beaufschlagte Wirkfläche 55 aufweist. Durch Schalten des Magnetventils 67 kann insoweit die Liftachse 20 angehoben werden. Es besteht die Möglichkeit, an die Leitung 57 einen Druckschalter 68 anzuschließen, der beim Auftreten eines entsprechenden Druckes nun seinerseits das Magnetventil 67 schaltet und damit den Anhebevorgang der Liftachse auslöst.

### BEZUGSZEICHEHLISTE

- 1: - Steuereinrichtung
- 2: - Gehäuse
- 3: - Achsliftventil
- 4: - Regelventil
- 5: - Umschaltventil
- 6: - Dämpfungsbehälter
- 7: - Steuerstange
- 8: - Griff
- 9: - Gehäusebohrung
- 10: - Dichtung
- 11: - Dichtung
- 12: - Dichtung
- 13: - Einschnürung
- 14: - Anschluß
- 15: - Leitung
- 16: - Vorratsbehälter
- 17: - Anschluß
- 18: - Leitung
- 19: - Liftbalg
- 20: - Liftachse
- 21: - Dichtung
- 22: - Dichtung
- 23: - Einschnürung
- 24: - Einschnürung
- 25: - Anschluß
- 26: - Leitung
- 27: - Luftfederbalg
- 28: - Anschluß
- 29: - Leitung
- 30: - Niveauregelventil
- 31: - Einsatzkörper
- 32: - Bohrung
- 33: - Bohrung
- 34: - Deckel
- 35: - Kanal
- 36: - Rückschlagventil
- 37: - Flatterventil
- 38: - Kanal
- 39: - Bohrung
- 40: - Fortsatz
- 41: - Dichtung
- 42: - Kolben
- 43: - Gehäusebohrung
- 44: - Feder
- 45: - Fortsatz
- 46: - Feder
- 47: - Leitung
- 48: - Einsatz
- 49: - Drosselkörper
- 50: - Ringmanschette
- 51: - Leitung
- 52: - Raum
- 53: - Leitung
- 54: - Wirkraum
- 55: - Wirkfläche
- 56: - Drossel
- 57: - Leitung
- 58: - Raum
- 59: - Kolben
- 60: - Fortsatz
- 61: - Fortsatz
- 62: - Feder
- 63: - Sperrventil
- 64: - Belastungsfeder
- 65: - Wirkfläche
- 66: - Leitung
- 67: - Magnetventil
- 68: - Druckschalter
- 69: - Rückführfeder
- 70: - Raum

## Patentansprüche

1. Baueinheit zum Steuern einer Liftachse (20) an einem mehrachsigen Nutzfahrzeug, mit einem Achsliftventil (3), einem Regelventil (4) zum automatischen Anheben bzw. Absenken der Liftachse in Abhängigkeit vom Beladungszustand, mindestens einem Umschaltventil (5) sowie den zugehörigen Leitungsverbindungen für die Schaltelemente, die in einem gemeinsamen Gehäuse (2) untergebracht sind, wobei das Achsliftventil (3) eine in zwei Stellungen verschiebbare Steuerstange (7) aufweist, die die Be- und Entlüftung des Hebebalges (19) der Liftachse (20) mit dem Druck aus einem Vorratsbehälter (16) steuert, **dadurch gekennzeichnet**, daß das Achsliftventil (3) und das Umschaltventil (5) mit gemeinsamer Achse in dem Gehäuse (2) untergebracht sind und daß die Steuerstange (7) des Achsliftventils (3) zugleich als Bestandteil des Ein/Auslaßventils des Umschaltventils (5) für die Druckversorgung der Luftfederbälge (27, 27') der Liftachse (20) über ein Niveauregelventil (30) ausgebildet ist.

2. Baueinheit nach Anspruch 1, **dadurch gekennzeichnet**, daß die gemeinsame Steuerstange (7) des Achsliftventils (3) und des Umschaltventils (5) in einer insbesondere gestuften Gehäusebohrung (9) gleitend und dichtend (10, 11, 12, 22) geführt ist und einen weiteren Dichtungsring (21) aufweist, der mit einer Bohrung (33), die mit einer von dem Niveauregelventil (30) herangeführten Leitung (29) in Verbindung steht, das Einlaßventil und mit einer axial beabstandet angeordneten weiteren Bohrung (32), die über eine Leitung (26) mit den Luftfederbälgen (27) der Liftachse (20) in Verbindung steht, das Auslaßventil des Umschaltventils (5) bildet.

3. Baueinheit nach Anspruch 1 und 2, **dadurch gekennzeichnet**, daß die gemeinsame Steuerstange (7) des Achsliftventils (3) und des Umschaltventils (5) zu Zwecken der Entlüftung hohl ausgebildet ist.

4. Baueinheit nach Anspruch 1 und 2, **dadurch gekennzeichnet**, daß ein die Steuerstange (7) umgebender gehäusefester Einsatzkörper (31) vorgesehen ist, der die beiden Bohrungen (32, 33) trägt, die über drei Dichtungen gehäuseseitig abgedichtet sind.

5. Baueinheit nach Anspruch 1, **dadurch gekennzeichnet**, daß die Steuerstange (7) zwei benachbart angeordnete Dichtringe (11, 12) für die zeitverzögerte Entlüftung des Liftbalges (19) der Liftachse (20) aufweist.

6. Baueinheit nach Anspruch 4, **dadurch gekennzeichnet**, daß zur gehäusefesten Lagerung des Einsatzkörpers (31) ein die gestufte Bohrung (9) abschließender Deckel (34) vorgesehen ist, der zu Zwecken der Entlüftung hohl ausgebildet ist.

7. Baueinheit nach Anspruch 1, **dadurch gekennzeichnet**, daß das Achsliftventil (3) einkreisig angesteuert ist.

8. Baueinheit nach Anspruch 1, **dadurch gekennzeichnet**, daß die gemeinsame Steuerstange (7) des Achsliftventils (3) und des Umschaltventils (5) eine kreisringförmige Wirkfläche (55) zum Umschalten in Abhängigkeit von der Beaufschlagung durch das Regelventil (4) aufweist.

9. Baueinheit nach den Ansprüchen 1 bis 3 und 8, **dadurch gekennzeichnet,** daß die kreisförmige Wirkfläche (55) der Steuerstange (7) des Achsliftventils (3) entgegen ihrer Beaufschlagungsrichtung durch den Balgdruck der Fahrachse auf einer Rückführfeder (69) abgestützt ist, und daß der die Rückführfeder aufnehmende Rückraum (70) an die Atmosphäre angeschlossen ist.

10. Baueinheit nach den Ansprüchen 1 oder 8, **dadurch gekennzeichnet**, zeichnet, daß in der von einem Federbalg der Fahrachse zu dem Regelkolben (42) des Regelventils (4) führenden Leitung (51) ein elektrisch schaltbares Sperrventil (63) vorgesehen ist, das in nicht-betätigtem Zustand den Durchgang durch die Leitung (51) freigibt und in betätigtem Zustand die Leitung (51) absperrt oder zumindest stark drosselt.

11. Baueinheit nach Anspruch 1 bis 3, **dadurch gekennzeichnet**, daß die Steuerstange (7) von einer Belastungsfeder (64) im Sinne der Absenkung der Liftachse (20) belastet ist, und daß die Steuerstange (7) eine der Belastungsfeder (64) entgegenwirkende Wirkfläche (65) aufweist, die über ein elektrisch steuerbares Magnetventil (67) mit Vorratsdruck beaufschlagbar ist.

12. Baueinheit nach Anspruch 1, **dadurch gekennzeichnet**, daß die Baueinheit einen dem Regelventil (4) vorgeschalteten Dämpfungsbehälter (6) aufweist.

## Claims

1. Control assembly for a lifting axle (20) of a multiple axle utility vehicle, including an axle lifting valve (3), a control valve (4) for automatically lifting and lowering, respectively, the lifting axle load-dependently, at least one change-over valve (5) and corresponding conduits for the connection of the control elements arranged in a common housing (2), the axle lifting valve (3) including a control rod (7) movable into two positions and controlling the aerating and the venting of the lifting bellow (19) of the lifting axle (20) by the pressure from a container (16), **characterized in**
that the axle lifting valve (3) and the change-over valve (5) are arranged in the housing with a common axis, and that the control rod (7) of the axle lifting valve (3) is formed at the same time as a part of the inlet/outlet valve of the change-over valve (5) for the pressure supply of the suspension bellows (27, 27') of the lifting axle (20).

2. Control assembly according to claim 1, **characterized in** that the common control rod (7) of the axle lifting valve (3) and of the change-over valve (5) is guided movably and sealingly (10, 11, 12, 22) in a stepped bore (9) in the housing and includes another seal ring (21) forming the inlet valve together with a bore (33) connected to a conduit (29) coming from the levelling valve (30), and forming the outlet valve of the change-over valve (5) together with another axially spaced apart bore (32) connected to the suspension bellows (27) of the lifting axle (20) via a conduit (26).

3. Control assembly according to claim 1 or 2, **characterized in** that the common control rod (7) of the axle lifting valve (3) and of the change-over valve (5) is designed to be hollow for venting.

4. Control assembly according to claim 1 or 2, **characterised in** that an insert body (31) surrounding the common control rod (7) and being fixedly connected to the housing is provided, the insert body (31) carrying the two bores (32, 33) sealed on the side of the housing by three seals.

5. Control assembly according to claim 1, **characterized in** that the control rod (7) includes two adjacent seal rings (11, 12) for the delayed venting of the lifting bellow (19) of the lifting axle (20).

6. Control assembly according to claim 4, **characterized in** that a cover (34) covering the stepped bore (9) is provided for the support of the insert body (31) on the side of the housing, the cover (34) being designed to be hollow for venting.

7. Control assembly according to claim 1, **characterized in** that the axle lifting valve (3) is single-circuit controlled.

8. Control assembly according to claim 1, **characterized in** that the common control rod (7) of the axle lifting valve (3) and of the change-over valve (5) has an annular effective surface (55) for changing-over dependent from the impingement by the control valve (4).

9. Control assembly according to claims 1 to 3 and 8, **characterized in** that the annular effective surface (55) of the control rod (7) of the axle lifting valve (3) is supported on a return spring (69) by the bellow pressure of the driving axle opposite to its direction of impingement, and that the return chamber (70) containing the return spring (69) is connected to the atmosphere.

10. Control assembly according to claims 1 or 8, **characterized in** that an electrically controllable check valve (63) is arranged inside the conduit (51) leading from one suspension bellow of the driving axle to the control piston (42) of the control valve (4), the check valve (63) in its non-actuated position releasing the conduit (51) and in its actuated position blocking or at least throttling the conduit (51).

11. Control assembly according to claim 1 to 3, **characterized in** that the control rod (7) is biased by a bias spring (64) in the sense of lowering the lifting axle (20), and that the control rod (7) has an effective surface (65) being effective in a direction opposite to the bias spring (64), the effective surface (65) being impingeable with container pressure via an electrically controllable solenoid valve (67).

12. Control assembly according to claim 1, **characterized in** that the assembly includes a dampening container (6) arranged upstream of the control valve (4).

## Revendications

1. Bloc de commande destiné à commander un essieu relevable (20) d'un véhicule utilitaire à plusieurs essieux, comportant une soupape de relevée d'essieu (3), une soupape de régulation (4) pour le relevage ou l'abaissement automatique de l'essieu relevable en fonction de l'état de charge, au moins une soupape de commutation (5) ainsi que les conduites de liaison correspondantes pour les éléments de commutation, qui sont logés dans un boîtier (2) commun, la soupape de relevage d'essieu (3) présentant une tige de commande (7) qui peut coulisser dans deux positions et qui commande l'alimentation en air et la mise à l'atmosphère du soufflet de levage (19) de l'essieu relevable (20) avec la pression provenant d'un réservoir (16), caractérisé en ce que la soupape de relevage d'essieu (3) et la soupape de commutation (5) sont logées avec un axe commun dans le boîtier (2) et en ce que la tige de commande (7) de la soupape de relevage d'essieu (3) est réalisée en même temps en tant que composant de la soupape d'admission/échappement de la soupape de commutation (5) pour l'alimentation en pression des soufflets de suspension pneumatique (27, 27') de l'essieu relevable (20), par l'intermédiaire d'une soupape de régulation de niveau (30).

2. Bloc de commande selon la revendication 1, caractérisé en ce que la tige de commande (7) commune de la soupape de relevage d'essieu (3) et de la soupape de commutation (5) est guidée à glissement et de manie à assurer l'étanchéité (10, 11, 12, 22) dans un alésage (9) du boîtier, en particulier un alésage étagé, et présente une autre bague d'étanchéité (21), qui forme d'une part la soupape d'admission de la soupape de commutation (5) en combinaison avec un orifice (33) qui est en liaison avec une conduite (29) provenant de la soupape de régulation de niveau (30), et d'autre put la soupape d'échappement en combinaison avec un autre orifice (32), qui est espacé axialement et qui est en liaison par une conduite (26) avec les soufflets de suspension pneumatique (27) de l'essieu relevable (20).

3. Bloc de commande selon les revendications 1 et 2, caractérisé en ce que la tige de commande (7) commune de la soupape de relevage d'essieu (3) et de la soupape de commutation (5) est creuse à des fins de mise à l'atmosphère.

4. Bloc de commande selon les revendications 1 et 2, caractérisé en ce qu'est prévu un corps formant insert (31) solidaire du boîtier, qui entoure la tige de commande (7) et qui porte les deux orifices (32, 33), lesquels sont rendus étanches côté boîtier par trois garnitures d'étanchéité.

5. Bloc de commande selon la revendication 1, caractérisé en ce que la tige de commande (7) présente deux bagues d'étanchéité (11, 12) disposées au voisinage l'une de l'autre pour la mise à l'atmosphère temporisée du soufflet de relevage (19) de l'essieu relevable (20).

6. Bloc de commande selon la revendication 4, caractérisé en ce qu'un bouchon (34) fermant l'alésage (9) étagé et qui est creux à des fins de mise à l'atmosphère, est prévu pour la fixation du corps formant insert (31) dans la boîtier.

7. Bloc de commande selon la revendication 1, caractérisé en ce que la soupape de relevage d'essieu (3) est commandée par un circuit.

8. Bloc de commande selon la revendication 1, caractérisé en ce que la tige de commande (7) commune de la soupape de relevage d'essieu (3) et de la soupape de commutation (5) présente une surface active (55) a forme d'anneau de cercle pour la commutation en fonction de l'alimentation assurée pu la soupape de régulation (4).

9. Bloc de commande selon les revendications 1 à 3 et 8, caractérisé en ce que la surface active (55) circulaire de la tige de commande (7) de la soupape de relevage d'essieu (3) est soutenue, dans le sens contraire au sens de son actionnement par la pression du soufflet de l'essieu de roulement, par un ressort de rappel (69), et en ce que le volume arrière (70), logeant le ressort de rappel, est raccordé à l'atmosphère.

10. Bloc de commande selon les revendications 1 ou 8, caractérisé en ce que dans la conduite (51) menant d'un soufflet de suspension de l'essieu de roulement au piston de régulation (42) de la soupape de régulation (4), il est prévu une soupape d'arrêt (63) commutable électriquement, qui dans son état non actionné dégage le passage à travers la conduite (51) et qui, à l'état actionné, ferme la conduite (51) ou au moins la réduit fortement.

11. Bloc de commande selon les revendications 1 à 3, caractérisé en ce que la tige de commande (7) est sollicitée par un ressort de charge (64) dans le sens de l'abaissement de l'essieu relevable (20), et en ce que la tige de commande (7) présente une surface active (65) qui agit a sens inverse du ressort de charge (64) et qui peut être sollicitée par la pression de réservoir par l'intermédiaire d'une électrovalve (67).

12. Bloc de commande selon la revendication 1, caractérisé en ce que le bloc de commande comporte un récipient d'amortissement (6) monté en amont de la soupape de régulation (4).
